# EUROPÄISCHE PATENTSCHRIFT

(11) **EP 1 385 725 B1**
(45) Veröffentlichungstag und Bekanntmachung des Hinweises auf die Patenterteilung: **18.02.2009**
(21) Anmeldenummer: 02748677.8
(22) Anmeldetag: 26.04.2002
(51) Int. Cl.: B60T 13/00

(54) **VORGESTEUERTES VENTIL MIT EINEM BACKUPVENTIL**
PILOT VALVE WITH A BACKUP VALVE
VANNE PILOTE AVEC VANNE DE SECOURS

(30) Priorität: 26.04.2001 DE 10120320
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DEJA, Siegmund, 71691 Freiberg (DE); SCHAFFERT, Eberhard, 71229 Leonberg (DE)
(86) Internationale Anmeldenummer: PCT/EP2002/004631
(87) Internationale Veröffentlichungsnummer: WO 2002/087942

(56) Entgegenhaltungen:
- DE-A- 3 931 761
- DE-A- 4 136 244
- DE-A- 19 605 562
- DE-A- 19 609 222

## Beschreibung

Die Erfindung betrifft ein vorgesteuertes Ventil, insbesondere ein elektropneumatisches Regelventil für ein Druckluftbremssystem eines Fahrzeuges, mit einem Relaisventilgehäuse, in dem ein axial verstellbarer Steuerkolben zur Betätigung einer den Druckluftfluss zwischen zumindest einem außenliegenden Bremsleitungsanschluss, einem Speisedruckanschluss sowie einem Entlüftungsanschluss schaltenden Ventilsitzanordnung angeordnet ist, wobei der Steuerkolben über eine elektromagnetische Vorsteuerventilanordnung, bestehend aus mindestens einem Auslassventil, einem Einlassventil und einem Backupventil, zur Axialverstellung bewegbar ist, die gemeinsam in einem mit dem Relaisventilgehäuse verbundenen Vorsteuerventilgehäuse untergebracht sind. Insbesondere befasst sich die vorliegende Erfindung mit einer speziellen Ausgestaltung der Kanalführung an dem Backupventil.

Ein als elektropneumatisches Regelventil ausgebildetes vorgesteuertes Ventil wird innerhalb eines Druckluftbremssystems eines Fahrzeuges eingesetzt, um einen Bremsdruck entsprechend der gewünschten - durch ein Fußbremspedal vorgebbaren - Bremswirkung auszuregeln. Eine vom Regelventil ausgehende Bremsleitung steht zu diesem Zwecke gewöhnlich mit einem Bremszylinder in Verbindung, der wiederum die zum Bremsen des Fahrzeuges benötigte Bremskraft erzeugt und an eine hiermit in Wirkverbindung stehende Scheiben- oder Trommelbremse weiterleitet. Die Vorgabe des Druck-Sollwertes für das elektropneumatische Regelventil kann sowohl elektrisch als auch pneumatisch erfolgen. Die pneumatische Ansteuerung wird jedoch nur zur Sicherheit im Falle eines Ausfalls der elektrischen Ansteuerung - beispielsweise infolge eines Stromausfalls - benutzt.

Aus der DE 196 05 562 A1 ist eine elektropneumatisches Regelventil bekannt, das ein zweigeteiltes metallisches Gehäuse aufweist, welches aus einem unteren Relaisventilgehäuse sowie einem damit verschraubten oberen Vorsteuerventilgehäuse besteht. Am unteren Relaisventilgehäuse befindet sich ein Bremsleitungsanschluss, ein Speisedruckanschluss sowie ein Entlüftungsanschluss. Über eine innenliegende Ventilsitzanordnung, bestehend aus einem gegen zwei konzentrische Ventilsitze drückendes Verschlusselement, ist ein Druckluftfluss zwischen den äußeren Anschlüssen schaltbar. Zum Schalten wird das Verschlusselement entgegen der Kraft einer Rückstellfeder axial betätigt. Die Betätigung des Verschlusselements erfolgt über einen ebenfalls im Relaisventilgehäuse innerhalb eines Hohlraumes angeordneten großflächigen Steuerkolben. Der Steuerkolben wird über einen Steuerdruck zur Längsverstellung beaufschlagt, wobei der Steuerdruck über eine Vorsteuerventilanordnung erzeugt wird.

Zur Einstellung und Anderung des Steuerdrucks dient hier eine aus zwei Elektromagentventilen bestehende Vorsteuerventilanordnung, die innerhalb des Vorsteuerventilgehäuses untergebracht ist. Das erste als Einlassventil ausgebildete Elektromagnetventil ist stromlos geöffnet und kommuniziert mit einem vom Speisedruckanschluss abgezweigten Speisekanal sowie einem zur Steuerkammer geführten Arbeitskanal. Das zweite als Auslassventil dienende Elektromagnetventil dient zum Entlüften der Steuerkammer und ist stromlos geschlossen. Das Auslassventil ist ebenfalls über seine Arbeitsleitung mit der Steuerkammer verbunden, wogegen über einen koaxialen Entlüftungskanal abluftseitig eine Verbindung mit der Atmosphäre über den Entlüftungsanschluss am Relaisventilgehäuse herstellbar ist. Der Steuerdruck wird durch ein koordiniertes Bestromen des Einlass- und Auslassventils verändert. Dieser Änderung erfolgt entsprechend einer Druckregelung. Zur Überwachung des Steuerdrucks ist ein Drucksensor im Bereich der Arbeitskammer vorgesehen. Ferner existiert eine Regelelektronik, an welche die beiden Elektromagnetventile der Vorsteuerventilanordnung sowie auch der Drucksensor angeschlossen sind. Eine Sollwert-Vorgabe für die Regelung erfolgt von einer entfernt angeordneten zentralen Steuereinheit des Druckluftbremssystems.

Aus der veröffentlichten Produktinformation "Elektronisches Bremssystem" (Firma Knorr-Bremse System für Nutzfahrzeuge GmbH, Drucknr. P-351 0-DE-01) ist ein elektropneumatisches Regelventil der vorstehend beschriebenen Art bekannt, das zusätzlich zu einer über ein Einlass- und Auslassventil realisierbaren elektrischen Ansteuerung auch hilfsweise eine pneumatische Ansteuerung ermöglicht. Ein pneumatisch zweikreisig ausgelegter zweiter Betriebsbremskreis sichert bei Ausfall der elektrischen Ansteuerung die Hilfsbremsfunktion und wirkt über das elektropneumatische Regelventil auf die Bremszylinder aller Räder.

Eine derartige Funktion wird - wie allgemein bekannt ist - über ein zusätzlich zum Einlass- und Auslassventil der Vorsteuerventilanordnung vorgesehenes Backupventil realisiert. Das Backupventil steht speiseseitig mit einem Steueranschluss des Regelventils in Verbindung, wogegen arbeitsseitig eine Verbindung zur Steuerkammer hin besteht. Das Backupventil ist stromlos offen, wobei das Öffnen durch den infolge eines Ausfalls der elektrischen Ansteuerung verursachten Stromausfall bewirkt wird. In diesem Zustand kann der für die Hilfsbremsfunktion über das Fußbremsventil freigebbare Steuerdruck in die Steuerkammer gelangen, um insoweit den Steuerkolben zu betätigen, d.h. die Bremse zu bedienen. Bei einer funktionstüchtigen elektrischen Ansteuerung ist das Backupventil dagegen infolge eines Bestromens der zugeordneten Spule durch die Verstellung eines innenliegenden beweglichen Ankers geschlossen, so dass kein der Hilfsbremsfunktion zugeordneter Steuerdruck in die Steuerkammer gelangen kann.

Aus sicherheitstechnischen Gründen ist es erforderlich, den speiseseitigen Kanal des Backupventils koaxial derart in eine innenliegende Ventilkammer einmünden zu lassen, dass der gegenüberliegende bewegliche Anker zentral angeströmt wird, um im Falle eines Bruchs einer innenliegenden, den Anker rückstellenden Feder ein Öffnen des Backupventils zu garantieren. Bei einer außermittigen Anordnung kann das Öffnen dagegen nicht sichergestellt werden. Infolge dieser zentralen Anordnung des speiseseitigen Kanals des Backupventils ist der arbeitsseitige Kanal des Backupventils außermittig anzuordnen, um bei den herrschenden Platzverhältnisses die gewünschte Ventilfunktion zu ermöglichen.

Diese aus sicherheitstechnischen Gründen realisierte Kanalführung verursacht jedoch einen hieran angepassten größeren Bauraum innerhalb des Vorsteuerventilgehäuses, um die drei zur Vorsteuerventilanordnung zählenden Ventile aufnehmen zu können. Hierbei ist das Auslassventil mittig innerhalb des Vorsteuerventitgehäuses anzuordnen, da der hiervon abgehende Entlüftungskanal koaxial durch das Relaisventilgehäuse hindurch zum Entlüftungsanschluss zu führen ist. Diese bauliche Restriktion verursacht eine Breitenausdehnung des Vorsteuerventilgehäuses, da die anderen beiden Ventile mit je einem Arbeitskanal die Steuerkammer erreichen müssen, um - im Falle des Einlassventils - eine Beaufschlagung der Steuerkammer zu ermöglichen und - im Falle des Backupventils - eine hilfsweise Steuerdruckbeaufschlagung zu gewährleisten. Da jedoch die aus sicherheitstechnischen Gründen vorgegebene Lage der Anschlusskanäle am Backupventil bei Beachtung der anderen baulicher Randbedingungen nur eine beabstandete Anordnung zum zentral platzierten Auslassventil zulässt, wird hierdurch der im Vorsteuerventilgehäuse benötigte Bauraum verbreitert.

Es ist daher die Aufgabe der vorliegenden Erfindung, ein gattungsgemäßes vorgesteuertes Ventil zu schaffen, bei dem der für die Vorsteuerventilanordnung benötigte Bauraum minimal ist.

Die Erfindung wird ausgehend von einem vorgesteuerten Ventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Backupventil über einen koaxial innerhalb eines Anschlusselements angeordneten Arbeitskanal einerseits mit dem Randbereich der Steuerkammer verbunden ist und andererseits seitlich in eine Ventilkammer einmündet, und dass ein einerseits koaxial in die Ventilkammer einmündender Speisekanal andererseits über eine am Anschlusselement außerradial vorgesehene Öffnung mit der Steuerdruckluft versorgbar ist, um durch die insoweit gedrehte Kanalführung den für die Vorsteuerventilanordnung benötigten Raum innerhalb des Vorsteuerventilgehäuses zu verkleinern.

Der Vorteil der erfindungsgemäßen Maßnahme besteht darin, dass nunmehr bei Beachtung der herrschenden baulichen Randbedingungen eine unmittelbar benachbarte Anordnung des Backupventils neben dem Auslassventil möglich ist, wodurch die Breitenausdehnung des Vorsteuerventilgehäuses verkleinert werden kann. Durch die Verlegung des Arbeitskanals des Backupventils, welcher in die Steuerkammer einmündet, auf die zentrale Achse des Backupventils lässt eine Anordnung des Backupventils näher zur Achse des gesamten Regelventils zu.

Vorzugsweise weist das Einlassventil ebenfalls einen koaxial innerhalb eines zugeordneten Anschlusselements verlaufenden Arbeitskanal auf, der in den Randbereich der Steuerkammer einmündet, wogegen der Speisekanal seitlich in eine Ventilkammer einmündet. Durch die insoweit definierte Kanalführung kann eine weitere Bauraumminimierung erzielt werden. Bei dem Einlassventil ist es nicht erforderlich, dass der Speisekanal koaxial derart in eine innenliegende Ventilkammer einmündet, dass der gegenüberliegende bewegliche Anker zentral angeströmt wird, da die beim Backupventil geltenden sicherheitstechnischen Aspekte hier nicht berücksichtigt werden müssen.

Weitere, die Erfindung verbessernde Maßnahmen sind in den abhängigen Ansprüchen angegeben oder werden nachfolgend gemeinsam mit der Beschreibung eines bevorzugten Ausführungsbeispiels der Erfindung näher dargestellt. Es zeigt:

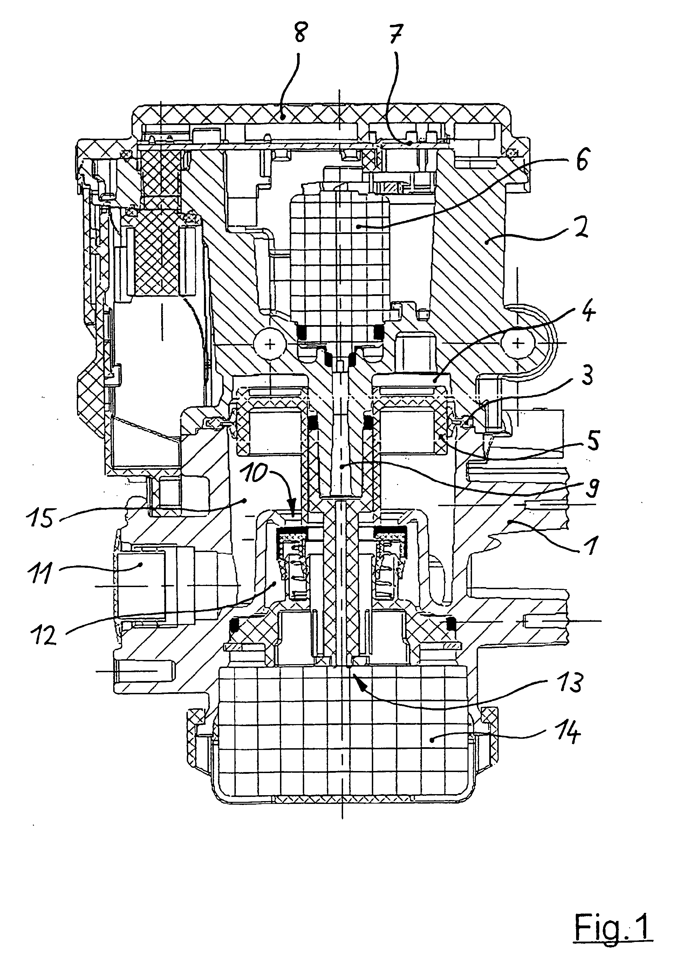

- Figur 1: einen Längsschnitt durch ein elektropneumatisches Regelventil mit einem Relaisventilgehäuse und einem Vorsteuerventilgehäuse.

Das elektropneumatische Regelventil gemäß Figur 1 besitzt ein zweigeteiltes Gehäuse, das aus einem unteren Relaisventilgehäuse 1 besteht, welches mit einem oberen Vorsteuerventilgehäuse 2 über einen dazwischenliegenden Dichtring 3 verbunden ist. Die Verbindung erfolgt dabei über eine (nicht weiter dargestellte) Verschraubung. Das Relaisventilgehäuse 1 und das Vorsteuerventilgehäuse 2 schließen eine innenliegende Steuerkammer 4 ein, in der ein Steuerkolben 5 axial bewegbar angeordnet ist. Zur axialen Verstellung des Steuerkolbens 5 dient eine seitens des Vorsteuerventilgehäuses 2 untergebrachte elektromagnetische Vorsteuerventilanordnung. In dem gezeigten Längsschnitt ist hiervon lediglich ein Auslassventil 6 erkennbar. (Darüber hinaus umfasst die Vorsteuerventilanordnung ein Einlassventil sowie ein Backupventil.) Die Vorsteuerventilanordnung wird über eine ebenfalls im Vorsteuerventilgehäuse 2 angeordnete Elektronikeinheit 7 elektrisch angesteuert. Die Elektronikeinheit 7 befindet sich unterhalb eines Deckels 8 innerhalb des Vorsteuerventilgehäuses 2.

Das gezeigte Auslassventil 6 entlüftet bei Betätigung die Steuerkammer 4, wobei die Abluft über einen koaxialen Entlüftungskanal 9 an die Atmosphäre abgeleitet wird. Neben dem als Auslassventil 6 dienenden Vorsteuerventil sorgt das (hier nicht gezeigte) Einlassventil für eine Beaufschlagung der Steuerkammer 4 mit einem Steuerdruck, um den Steuerkolben 5 zu betätigen.

Bei einer solchen Beaufschlagung der Steuerkammer 4 bewegt der Steuerkolben 5 über eine untere hülsenartige koaxiale Anformung eine Ventilsitzanordnung 10. Hierüber ist der Druckluftfluss zwischen einem am Relaisventilgehäuse 1 angeordneten Bremsleitungsanschluss 11 einerseits sowie einem (hier nicht erkennbaren) Speisedruckanschluss - der mit einer internen Speisedruckkammer 12 in Verbindung steht - und einem Entlüftungsanschluss 13 andererseits schaltbar. Der Entlüftungsanschluss 13 ist zusätzlich mit einem Schalldämpfer 14 versehen. Der Schalldämpfer 14 sorgt für eine Minderung des durch die ausströmende Abluft verursachten Geräuschs.

Das elektropneumatische Regelventil ist hier in seiner abgeschlossenen Schaltstellung gezeigt. Bei Beaufschlagung der Steuerkammer 4 mit einem Steuerdruck und darauffolgender Bewegung des Steuerkolbens 5 in Richtung einer unteren Position erfolgt durch ein entsprechendes Öffnen der Ventilsitzanordnung 10 ein Durchfluss, ausgehend von der Speisedruckkammer 12 zu einer Arbeitskammer 15, die an den Bremsleitungsanschluss 11 einmündet, um den Bremsdruck infolgedessen zu erhöhen.

Bei einer Entlüftung der Steuerkammer 4 wird der Steuerkolben 5 in eine obere Position überführt, wobei die Ventilsitzanordnung 10 dementsprechend geöffnet wird, so dass ausgehend vom Bremsleitungsanschluss 11 Druckluft über die Arbeitskammer 15 zum Entlüfiungsanschluss 13 gelangt, um den Bremsdruck entsprechend abzusenken. Somit wird der Bremsdruck durch eine wechselseitige Bewegung des Steuerkolbens 5 beeinflusst. In der gezeigten mittleren, abgeschlossenen Schaltposition erfolgt kein Druckluftfluss.

Die Beaufschlagung des Steuerkolbens 5 wird über eine dem Vorsteuerventilgehäuse 2 zugeordnete Vorsteuerventilanordnung, bestehend aus dem Auslassventil 6, dem vorgenannten Einlassventil sowie Backupventil, realisiert. Das Auslassventil 6 ist zentral derart innerhalb des Vorsteuerventilgehäuses 2 angeordnet, dass seine Hauptachse koaxial zur Hauptachse des Regelventils verläuft, in der der Entlüftungskanal 9 verläuft. Benachbart hierzu ist das Einlassventil angeordnet. Das Einlassventil weist einen koaxial angeordneten Arbeitskanal auf, der knapp in den Randbereich der Steuerkammer 4 einmündet. Dieselbe Anordnung ist auch für das Backupventil vorgesehen.

Um diese bauliche Anordnung zu ermöglichen, besteht das Backupventil aus einer elektrischen Spule, über die ein koaxialer innenliegender beweglicher Anker 19 axial verstellbar ist. Der bewegliche Anker ist über eine Druckfeder rückstellbar, so dass in der normal offenen Schaltstellung ein im beweglichen Anker eingelassenes Verschlusselement nicht an dem korrespondierenden, seitens eines koaxialen Anschlusselements angeformten Ventilsitz zur Anlage kommt. Die Druckfeder ist innerhalb einer internen Ventilkammer untergebracht. Das Anschlusselement ist mit einem Arbeitskanal versehen, der einerseits im Randbereich des Anschlusselements mit der Ventilkammer in Verbindung steht und andererseits koaxial am Anschlusselement ausmündet, wobei die austretende Druckluft knapp in den äußersten Randbereich der Steuerkammer einmündet. Ein den Steuerdruck von außen zuführender Speisekanal mündet einerseits koaxial in die Ventilkammer derart ein, dass der gegenüberliegende bewegliche Anker hierbei angeströmt wird. Über eine am Anschlusselement vorgesehene außenradiale Öffnung erfolgt die Versorgung mit Steuerdruck über weiterführende ventilinterne Kanalabschnitte.

Durch die insoweit gegenüber dem Stand der Technik gedrehte Kanalführung am Backupventil wird insgesamt ein weniger auf die Breite bezogener Bauraum innerhalb des Vorsteuerventilgehäuses benötigt, so dass das Regelventil insgesamt kleiner gestaltet werden kann.

### Bezugiszeichenliste

- 1: Relaisventilgehäuse
- 2: Vorsteuerventilgehäuse
- 3: Dichtring
- 4: Steuerkammer
- 5: Steuerkolben
- 6: Auslassventil
- 7: Elektronikeinheit
- 8: Deckel
- 9: Entlüftungskanal
- 10: Ventilsitzanordnung
- 11: Bremsleitungsanschluss
- 12: Speisedruckkammer
- 13: Entlüftungsanschluss
- 14: Schalldämpfer
- 15: Arbeitskammer

## Patentansprüche

1. Vorgesteuertes Ventil, insbesondere elektropneumatisches Regelventil für ein Druckluftbremssystem eines Fahrzeuges, mit einem Relaisventilgehäuse (1), in dem ein axial verstellbarer Steuerkolben (5) zur Betätigung einer den Druckluftfluss zwischen zumindest einem außenliegenden Bremsleitungsanschluss (11), einem Speisedruckanschluss sowie einem Entlüftungsanschluss (13) schaltenden Ventilsitzanordnung (10) angeordnet ist, wobei der Steuerkolben (5) über eine elektromagnetische Vorsteuerventilanordnung, bestehend aus mindestens einem Auslassventil (6), einem Einlassventil und einem Backupventil, zur Axialverstellung bewegbar ist, die gemeinsam in einem mit dem Relaisventilgehäuse (1) verbundenen Vorsteuerventilgehäuse (2) untergebracht sind,
**dadurch gekennzeichnet, dass** das Backupventil über einen koaxial innerhalb eines zugeordneten Anschlusselements angeordneten Arbeitskanal einerseits mit dem Randbereich der Steuerkammer (4) verbunden ist und andererseits seitlich in eine Ventilkammer einmündet, und dass ein einerseits koaxial in die Ventilkammer einmündender Speisekanal andererseits über eine am Anschlusselement außenradial vorgesehene Öffnung mit Steuerdruckluft versorgbar ist, um durch die insoweit gedrehte Kanalführung den für die Vorsteuerventilanordnung benötigten Bauraum innerhalb des Vorsteuerventilgehäuses (2) zu verkleinern.

2. Vorgesteuertes Ventil nach Anspruch 1,
**dadurch gekennzeichnet, dass** das Einlassventil ebenfalls einen koaxial innerhalb eines zugeordneten Anschlusselements angeordneten Arbeitskanal aufweist, der mit dem Randbereich der Steuerkammer (4) verbunden ist.

3. Vorgesteuertes Ventil nach Anspruch 1 oder 2,
**dadurch gekennzeichnet, dass** das Auslassventil (6) genau koaxial zum Steuerkolben (5) angeordnet ist, um einen koaxialen Verlauf des abgehenden Entlüftungskanals (9) in Richtung des Entlüftungsanschlusses (13) zu gewährleisten.

4. Vorgesteuertes Ventil nach einem der vorstehenden Ansprüche,
**dadurch gekennzeichnet, dass** das koaxial vom Backupventils abgehende Anschlusselement aus einem im Spritzgussverfahren hergestellten Kunststoff besteht.

5. Vorgesteuertes Ventil nach einem der vorstehenden Ansprüche,
**dadurch gekennzeichnet, dass** das der Ventilkammer zugewandte Ende des Anschlusselements als Ventilsitz ausgebildet ist.

6. Vorgesteuertes Ventil nach einem der vorstehenden Ansprüche,
**dadurch gekennzeichnet, dass** ein axial verstellbarer Anker des Backupventils über eine innerhalb der Ventilkammer angeordnete Druckfeder rückstellbar ist und stirnflächenseitig bei einer Bestromung des Backupventils am Ventilsitz zur Anlage kommt.

## Claims

1. Pilot-controlled valve, in particular electro-pneumatic control valve for a pneumatic brake system of a vehicle, comprising a relay valve housing (1) in which an axially adjustable slide valve (5) is disposed for operating a valve seat array (10) switching the compressed-air flow between at least one exterior brake pipe connector (11), one feeder pressure connector and a venting connector (139), wherein said slide valve (5) is movable via an electro-magnetic pilot valve array consisting of at least one discharge valve (6), one inlet valve and one backup valve, for axial adjustment, which valves are jointly accommodated in a pilot valve housing (2) connected to said relay valve housing (1), **characterised in that** said backup valve is connected via an operating passage, which is coaxially disposed within an associated connecting element, to the marginal zone of the control chamber (4), on the one hand, and opens laterally into a valve chamber, on the other hand, and that a feeder passage, which coaxially opens into said valve chamber, on the one hand, is adapted to be supplied with control compressed-air via an opening, on the other hand, which is provided radially on the outside of said connector element, so as to reduce the installation space inside said pilot valve housing (2), which is required for said pilot valve array, on account of the course of the passage which is insofar rotated.

2. Pilot-controlled valve according to Claim 1, **characterised in that** said inlet valve is equally provided with an operating passage coaxially disposed inside an associated connector element, which is connected to the marginal zone of said control chamber (4).

3. Pilot-controlled valve according to Claim 1 or 2, **characterised in that** said discharge valve (6) is arranged precisely coaxially with said slide valve (5) so as to ensure a coaxial course of the outgoing venting passage (9) in a direction towards said venting connector (13).

4. Pilot-controlled valve according to any of the preceding Claims, **characterised in that** said connector element coaxially outgoing from said backup valve consists of a synthetic material produced in the die-casting technique.

5. Pilot-controlled valve according to any of the preceding Claims, **characterised in that** the end of said connector element, which faces said valve chamber, is configured as valve seat.

6. Pilot-controlled valve according to any of the preceding Claims, **characterised in that** an axially adjustable armature of said backup valve is adapted to be reset via a compression spring disposed inside said valve chamber and bears against said valve seat on the face side when said backup valve is live.

## Revendications

1. Vanne pilotée, en particulier vanne de régulation électropneumatique pour un système de freinage pneumatique d'un véhicule, comprenant une boîte de soupape de décharge (1), dans laquelle un tiroir axialement ajustable (5) est disposé pour l'actionnement d'un arrangement à siège de soupape (10), qui commuter le courant de l'air comprimé entre au moins un raccord du conduit de freinage extérieur (11), un connecteur de pression d'alimentation et un raccord de purge d'air (139), dans laquelle ledit tiroir (5) est mobile via un arrangement à vanne pilote électromagnétique, qui est composé d'au moins une soupape de sortie (6), une soupape d'entrée et une soupape de secours, pour l'ajustement axial, à ces soupapes étant reçu en commun dans une boîte à vanne pilote (2) reliée à ladite boîte de soupape de décharge (1), **caractérisée en ce que** ladite soupape de secours est reliée, via un conduit d'actionnement, qui est coaxialement disposé à l'intérieur d'un élément de raccord affecté, à la zone de bord de la chambre de commande (4), d'un côté, et qui s'ouvre latéralement dans une chambre de soupape, de l'autre côté, et **en ce qu'**un conduit d'alimentation, qui s'ouvre axialement dans ladite chambre de soupape, d'un côté, est apte à être alimenté en air comprimé de commande via une ouverture, de l'autre côté, qui est radialement pourvue du côté extérieur dudit élément connecteur afin de réduire l'espace d'installation à l'intérieur de ladite boîte à vanne pilote (2), qui est requis pour ledit système de vanne pilote, en vertu de la course du conduit, qui est tournée en cet égard.

2. Vanne pilotée selon la revendication 1, **caractérisée en ce que** ladite soupape d'entrée est également munie d'un passage d'actionnement, qui est disposé à la zone de bord de ladite chambre de commande (4) de manière coaxiale à la dernière.

3. Vanne pilotée selon la revendication 1 ou 2, **caractérisée en ce que** ladite soupape de sortie (6) est disposée précisément en position coaxiale relative audit tiroir (5) afin d'assurer une course coaxiale du conduit de purge d'air (9) de sortie en une direction vers ledit raccord de purge d'air (13).

4. Vanne pilotée selon une quelconque des revendications précédentes, **caractérisée en ce que** ledit élément connecteur de sortie coaxial, en départ de ladite soupape de secours, est composé d'un matériau synthétique produit selon la technique de moulage sous pression.

5. Vanne pilotée selon une quelconque des revendications précédentes, **caractérisée en ce que** l'extrémité dudit élément connecteur, qui se trouve en face de ladite chambre de soupape, est configurée sous forme d'une siège de soupape.

6. Vanne pilotée selon une quelconque des revendications précédentes, **caractérisée en ce qu'**un corps d'induit axialement ajustable de ladite soupape de secours est apte à être retourné via un ressort de compression, qui est disposé à l'intérieur de ladite chambre de soupape et qui porte contre ladite siège de soupape du côté de face quand ladite soupape de secours est mise sous tension.
